# EUROPEAN PATENT APPLICATION

(11) **EP 4 040 529 A1**
(43) Date of publication of application: **10.08.2022**
(21) Application number: 20887498.2
(22) Date of filing: 11.11.2020
(51) Int. Cl.: H01M 4/133, H01M 4/587, H01M 4/36, H01M 4/1393, H01M 4/04, H01M 10/0525, H01M 4/525, H01M 4/02

(54) **PRE-LITHIATED ANODE AND SECONDARY BATTERY COMPRISING SAME**

(30) Priority: 12.11.2019 KR 20190144564
(71) Applicant: LG Energy Solution, Ltd., Seoul 07335 (KR)
(72) Inventor: CHOI, Hee-Won, Daejeon 34122 (KR); KIM, Ye-Ri, Daejeon 34122 (KR); PARK, Chan-Ki, Daejeon 34122 (KR); JO, Mi-Ru, Daejeon 34122 (KR); CHAE, Oh-Byong, Daejeon 34122 (KR); HWANG, Seung-Hae, Daejeon 34122 (KR)
(74) Representative: Hoffmann Eitle
(86) International application number: PCT/KR2020/095145
(87) International publication number: WO 2021/096338

(57) **Abstract**

Disclosed are a prelithiated negative electrode including: a negative electrode current collector; and a negative electrode active material layer formed on at least one surface of the negative electrode current collector, wherein the negative electrode active material layer includes high-capacity artificial graphite having no carbon coating, the negative electrode active material layer is prelithiated, and the content of lithium intercalated to the prelithiated negative electrode active material layer is 3-5% based on the lithium content intercalated when the negative electrode is charged to 100%, and a secondary battery including the negative electrode.

## Description

### TECHNICAL FIELD

The present disclosure relates to a prelithiated negative electrode and a secondary battery including the same. Particularly, the present disclosure relates to a prelithiated negative electrode having high capacity and energy density and showing improved cycle characteristics, and a secondary battery including the same.

The present application claims priority to Korean Patent Application No. 10-2019-0144564 filed on November 12, 2019 in the Republic of Korea, the disclosures of which are incorporated herein by reference.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PC and even to energy for electric vehicles. In this context, electrochemical devices have been most spotlighted. Among such electrochemical devices, development of rechargeable secondary batteries has been focused. More recently, active studies have been conducted about designing a novel electrode and battery in order to improve the capacity density and specific energy in developing such batteries.

Among the commercially available secondary batteries, lithium secondary batteries developed in the early 1990's have been spotlighted, since they have a higher operating voltage, significantly higher energy density, longer cycle life and a lower self-discharge rate, as compared to conventional batteries, such as Ni-MH, Ni-Cd and sulfuric acid-lead batteries using an aqueous electrolyte.

Since the conventional lithium secondary batteries use a lithium-intercalated compound, such as LiCoO₂ or LiMn₂O₄, as a positive electrode, such batteries have been manufactured by using a carbon electrode, to which lithium is not intercalated, as a negative electrode. In the case of a carbon electrode, a passivated coating film is formed on the surface thereof upon the initial charge, and the coating film interrupts insertion of an organic solvent into a gap between carbon lattice layers and inhibits decomposition of the organic solvent. In this manner, stabilization of a carbon structure and reversibility of a carbon electrode can be improved to allow use of the carbon electrode as a negative electrode for a lithium secondary battery.

However, since the formation of such a coating film is an irreversible reaction, lithium ions are consumed, resulting in a decrease in battery capacity undesirably. In addition, since the charge/discharge efficiency of the carbon electrode and positive electrode is not completely 100%, lithium ion consumption occurs, as the cycle number is increased, resulting in the problems of a decrease in electrode capacity and degradation of cycle life.

### DISCLOSURE

### Technical Problem

The present disclosure is designed to solve the problems of the related art, and therefore the present disclosure is directed to providing a prelithiated negative electrode which can provide a secondary battery with increased capacity and energy density and can improve cycle characteristics.

The present disclosure is also directed to providing a secondary battery including the prelithiated negative electrode.

In addition, the present disclosure is directed to providing a method for manufacturing the prelithiated negative electrode.

### Technical Solution

In one aspect of the present disclosure, there is provided a prelithiated negative electrode according to any one of the following embodiments.

According to the first embodiment, there is provided a prelithiated negative electrode including: a negative electrode current collector; and a negative electrode active material layer formed on at least one surface of the negative electrode current collector, wherein the negative electrode active material layer includes high-capacity artificial graphite having no carbon coating, the negative electrode active material layer is prelithiated, and the content of lithium intercalated to the prelithiated negative electrode active material layer is 3-5% based on the lithium content intercalated when the negative electrode is charged to 100%.

According to the second embodiment, there is provided the prelithiated negative electrode as defined in the first embodiment, wherein the high-capacity artificial graphite has a capacity of 360 mAh/g or more.

According to the third embodiment, there is provided the prelithiated negative electrode as defined in the first or the second embodiment, wherein the high-capacity artificial graphite has an average particle diameter (D₅₀) of 18 µm or more.

According to the fourth embodiment, there is provided the prelithiated negative electrode as defined in any one of the first to the third embodiments, wherein the prelithiation is carried out by using a lithium ion-supplying metal sheet through direct electric contact.

According to the fifth embodiment, there is provided a secondary battery including the prelithiated negative electrode as defined in any one of the first to the fourth embodiments, a positive electrode, and a separator interposed between the negative electrode and the positive electrode.

According to the sixth embodiment, there is provided the secondary battery as defined in the fifth embodiment, which has a capacity retention (%) at the 500^{th} cycle, 10% higher than the capacity retention (%) at the 500^{th} cycle of a secondary battery including a non-prelithiated artificial graphite negative electrode, and has a high-temperature storage performance retention (%), 5% higher than the high-temperature storage performance retention (%) of a secondary battery including a non-prelithiated artificial graphite negative electrode at the fourth week in a test for determination of high-temperature storage performance.

According to the seventh embodiment, there is provided the secondary battery as defined in the fifth or the sixth embodiment, wherein the positive electrode includes a lithium cobalt oxide.

According to the eighth embodiment, there is provided the secondary battery as defined in any one of the fifth to the seventh embodiments, which is a pouch-type secondary battery.

According to the ninth embodiment, there is provided a method for manufacturing a prelithiated negative electrode, including the steps of:
preparing a preliminary negative electrode having a negative electrode active material layer including high-capacity artificial graphite having no carbon coating; and
dipping the preliminary electrode and a lithium ion-supplying metal sheet as a counter electrode in an electrolyte, and applying electric current thereto to carry out prelithiation through the intercalation of lithium ions to the negative electrode active material layer, wherein the content of lithium intercalated to the prelithiated negative electrode active material layer is 3-5% based on the lithium content intercalated when the negative electrode is charged to 100%.

According to the tenth embodiment, there is provided the method for manufacturing a prelithiated negative electrode as defined in the ninth embodiment, wherein the high-capacity artificial graphite is obtained by the process including the steps of: heat treating a carbon precursor to obtain primary particles; and mixing the primary particles with a pitch binder and carrying out heat treatment to obtain secondary particles, and including no step of forming carbon coating on the secondary particles.

According to the eleventh embodiment, there is provided the method for manufacturing a prelithiated negative electrode as defined in the ninth or the tenth embodiment, wherein the electrolyte includes a lithium salt and a non-aqueous solvent.

### Advantageous Effects

According to an embodiment of the present disclosure, a negative electrode active material layer including high-capacity artificial graphite having no carbon coating is preliminarily subjected to prelithiation through an electrochemical charging process to 3-5% based on the lithium content intercalated when the negative electrode is charged to 100%. As a result, it is possible to provide a prelithiated negative electrode having improved cycle characteristics, showing high capacity and high energy characteristics, and having improved storage stability at high temperature, and a secondary battery including the same.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In one aspect of the present disclosure, there is provided a prelithiated negative electrode including: a negative electrode current collector; and a negative electrode active material layer formed on at least one surface of the negative electrode current collector, wherein the negative electrode active material layer includes high-capacity artificial graphite having no carbon coating, the negative electrode active material layer is prelithiated, and the content of lithium intercalated to the prelithiated negative electrode active material layer is 3-5% based on the lithium content intercalated when the negative electrode is charged to 100%.

The negative electrode current collector is not particularly limited, as long as it has conductivity, while not causing any chemical change in the corresponding battery. Particular examples of the negative electrode current collector include copper, stainless steel, aluminum, nickel, titanium, baked carbon, copper or stainless steel surface-treated with carbon, nickel, titanium, silver, etc., aluminum-cadmium alloy, or the like. In addition, similarly to a positive electrode current collector, fine surface irregularities may be formed on the surface of the negative electrode current collector to reinforce the binding force to the negative electrode active material. The negative electrode current collector may be used in various shapes, including a film, sheet, foil, net, porous body, foamed body, non-woven web, or the like.

The negative electrode current collector generally has a thickness of 3-500 µm.

The negative electrode active material layer may include a negative electrode active material, a conductive material, a binder, or the like. The negative electrode active material layer may further include a filler, if necessary.

According to an embodiment of the present disclosure, the negative electrode active material includes high-capacity artificial graphite having no carbon coating, i.e. 100% of artificial graphite.

Herein, the high-capacity artificial graphite may have a capacity of 360 mAh/g or more, or 361-365 mAh/g.

Relatively, low-capacity artificial graphite refers to artificial graphite having a capacity of less than 355 mAh/g.

When conventional artificial graphite has carbon coating formed thereon, soft carbon forming the carbon coating is disadvantageous in that it consumes capacity. Therefore, since the high-capacity artificial graphite according to the present disclosure has no carbon coating, it may be used as a negative electrode active material to provide a secondary battery with increased capacity and energy density.

According to an embodiment of the present disclosure, the high-capacity artificial graphite may have an average particle diameter (D₅₀) of 18 µm or more, 12-22 µm, or 15-20 µm.When the high-capacity artificial graphite has an average particle diameter within the above-defined range, it is possible to realize a capacity of 360 mAh/g or more by virtue of such a sufficiently large particle diameter.

Herein, D₅₀ is the particle diameter at the point of 50% in the particle number accumulated distribution as a function of particle diameter. D₅₀ may be determined by using the laser diffraction method. Particularly, powder to be analyzed is dispersed in a dispersion medium and introduced to a commercially available laser diffraction particle size analyzer (e.g. Microtrac S3500) to measure a difference in diffraction pattern depending on particle size, when the particles pass through laser beams, and then particle size distribution can be calculated. Then, D₅₀ may be determined by calculating the particle diameter at the point of 50% in the particle number accumulated distribution depending on particle diameter in the analyzer system.

According to an embodiment of the present disclosure, the negative electrode may include, as a negative electrode active material, a carbonaceous material, silicon-based material (e.g. silicon oxide of SiOₓ (0 < x < 2)), Si, or the like, besides the above-mentioned high-capacity artificial graphite.

The carbonaceous material may be at least one selected from the group consisting of crystalline natural graphite, amorphous hard carbon, low-crystalline soft carbon, carbon black, acetylene black, Ketjen black, Super P, graphene, and fibrous carbon.

According to an embodiment of the present disclosure, besides the above-mentioned high-capacity artificial graphite, particular examples of the negative electrode active material include a metal composite oxide, such as LiₓFe₂O₃ (0 ≤ x ≤ 1), LiₓWO₂(0 ≤ x ≤ 1), SnₓMe₁₋ₓMe'_{y}O_{z} (Me: Mn, Fe, Pb, Ge; Me': Al, B, P, Si, an element of Group 1, Group 2 or Group 3 in the Periodic Table, or halogen; 0 < x ≤ 1; 1 ≤ y ≤ 3; 1 ≤ z ≤ 8), or the like; lithium metal; lithium alloy; silicon-based alloy; tin-based alloy; metal oxide, such as SnO, SnO₂, PbO, PbO₂, Pb₂O₃, Pb₃O₄, Sb₂O₃, Sb₂O₄, Sb₂O₅, GeO, GeO2, Bi₂O₃, Bi₂O₄, Bi₂O₅, or the like; a conductive polymer, such as polyacetylene; a Li-Co-Ni type material; titanium oxide; lithium titanium oxide, or the like. Particularly, the negative electrode active material may include a carbonaceous material and/or Si.

The conductive material is added generally in an amount of 1-50 wt% based on the total weight of the mixture including the negative electrode active material. Such a conductive material is not particularly limited, as long as it has conductivity, while not causing any chemical change in the corresponding battery. Particular examples of the conductive material include: graphite, such as natural graphite or artificial graphite; carbon black, such as carbon black, acetylene black, Ketjen black, channel black, furnace black, lamp black or thermal black; conductive fibers, such as carbon fibers or metallic fibers; metal powder, such as fluorocarbon, aluminum or nickel powder; conductive whiskers, such as zinc oxide or potassium titanate; conductive metal oxides, such as titanium oxide; conductive materials, such as a polyphenylene derivative; or the like.

Meanwhile, a graphitic material having elasticity may be used as a conductive material, optionally in combination with the above-mentioned materials.

The binder is an ingredient which assists binding of the active material with the conductive material and binding to the current collector, and is added generally in an amount of 1-50 wt%, based on the total weight of the mixture including the negative electrode active material. Particular examples of the binder include polyvinylidene fluoride, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene terpolymer (EPDM), sulfonated EPDM, styrene butadiene rubber, fluororubber, various copolymers, or the like.

The dispersion medium may include water, alcohols, such as ethanol, acetone, or the like.

The filler is an ingredient which inhibits swelling of the negative electrode and is used optionally. Such a filler is not particularly limited, as long as it is a fibrous material, while not causing any chemical change in the corresponding battery. Particular examples of the filler include: olefinic polymers, such as polyethylene or polypropylene; and fibrous materials, such as glass fibers or carbon fibers.

According to an embodiment of the present disclosure, the negative electrode active material layer may include the binder in an amount of 1.5-3.0 parts by weight or 2-2.5 parts by weight, and the conductive material in an amount of 0.2-1.0 parts by weight or 0.5-0.7 parts by weight, based on 100 parts by weight of the high-capacity artificial graphite as a negative electrode active material.

According to an embodiment of the present disclosure, the prelithiation may be carried out by using a lithium ion-supplying metal sheet through direct electric contact.

Herein, the expression 'prelithiation through direct electric contact' refers to a process which includes dipping a negative electrode (preliminary negative electrode) before prelithiation and a lithium ion-supplying metal sheet in an electrolyte, and carrying out electric charging by applying electric current, or the like, so that lithium ions isolated from the lithium ion-supplying metal sheet may be intercalated to the negative electrode active material layer of the preliminary negative electrode.

The lithium ion-supplying metal sheet functions as a source for supplying lithium ions doped to the negative electrode active material layer, and may include a lithium ion-containing material selected from lithium, lithium alloys and mixtures thereof. The lithium alloys may include Li-Al, Li-Cu, Li-Si, or the like, but are not limited thereto.

The metal sheet may include a metal selected from lithium, lithium alloys and mixtures thereof, alone, or may further include a substrate attached to one surface of the metal for supporting the metal. The substrate may include stainless steel (SUS), aluminum, nickel, titanium, baked carbon, copper, or the like.

The metal sheet may have a thickness of 15-300 µm, or 20-100 µm.

The lithium content intercalated to the prelithiated negative electrode active material layer is 3-5% based on the lithium content intercalated when the negative electrode is charged to 100%. According to an embodiment of the present disclosure, the lithium content may be 3.5-4.5%, 3-4.5%, or 4.5-5%.

The expression 'lithium content intercalated to the prelithiated negative electrode active material layer' means the content of lithium ions intercalated to the negative electrode active material layer, before a battery formed by using the prelithiated negative electrode according to the present disclosure is operated, and may also be referred to as lithiation dosage (%) of the negative electrode active material layer.

When the lithium content intercalated to the prelithiated negative electrode active material layer is less than 3%, there is a problem in that improvement of cycle characteristics is limited due to a deficiency of reversible lithium sources. When the lithium content is larger than 5%, there is a problem in that the negative electrode shows a reduced potential due to an excessive amount of lithium sources, lithium metal may be deposited on the negative electrode surface, and the deposited lithium metal may function as resistance to increase the electrode resistance and battery resistance, resulting in a decrease in capacity and energy density of a secondary battery.

Th lithium content intercalated to the prelithiated negative electrode active material layer may be determined by using a device which allows flow of electric current through the connection between a working electrode and a counter electrode under a low-rate charging condition.

In another aspect of the present disclosure, there is provided a method for manufacturing a prelithiated negative electrode, including the steps of:
preparing a preliminary negative electrode having a negative electrode active material layer including high-capacity artificial graphite having no carbon coating; and
dipping the preliminary electrode and a lithium ion-supplying metal sheet as a counter electrode in an electrolyte, and applying electric current thereto to carry out prelithiation through the intercalation of lithium ions to the negative electrode active material layer, wherein the content of lithium intercalated to the prelithiated negative electrode active material layer is 3-5% based on the lithium content intercalated when the negative electrode is charged to 100%.

Hereinafter, each step will be explained in more detail.

A preliminary negative electrode having a negative electrode active material layer including high-capacity artificial graphite having no carbon coating is prepared.

The preliminary negative electrode is obtained by applying negative electrode slurry, prepared by dispersing a negative electrode active material, a conductive material and a binder in a dispersion medium, to a negative electrode current collector, followed by drying. If necessary, the negative electrode slurry may further include a filler.

High-capacity artificial graphite having no carbon coating is used as the negative electrode active material.

According to an embodiment of the present disclosure, the high-capacity artificial graphite is obtained by the process including the steps of: heat treating a carbon precursor to obtain primary particles; and mixing the primary particles with a pitch binder and carrying out heat treatment to obtain secondary particles, and including no step of forming carbon coating on the secondary particles.

Any material may be used as the carbon precursor, as long as it can be graphitized through heat treatment. Particular examples of the carbon precursor may include cokes, needle cokes, mosaic cokes, or a mixture of two or more of them. The heat treatment temperature applied to obtain the primary particles may be 1,200-1,800°C, or 1,500-1,700°C.

Next, the resultant primary particles are mixed with a pitch binder, and heat treatment is carried out to obtain secondary particles, wherein the heat treatment temperature may be 2,200-2,800°C, or 2,400-2,600°C. The pitch binder may include coal tar pitch, petroleum pitch, or the like.

According to an embodiment of the present disclosure, the pitch binder may be mixed with the primary particles in an amount of 3-5 parts by weight based on 100 parts by weight of the primary particles.

In addition, reference will be made to above description about the negative electrode current collector, the high-capacity artificial graphite, the conductive material, the binder and the filler.

The dispersion medium may include water, an alcohol, such as ethanol, acetone, or the like.

Next, the preliminary negative electrode and a lithium ion-supplying metal sheet as a counter electrode are dipped in an electrolyte, and electric current is applied thereto so that lithium ions may be intercalated to the negative electrode active material layer. In this manner, prelithiation is carried out.

Herein, the content of lithium intercalated to the prelithiated negative electrode active material layer is 3-5% based on the lithium content intercalated when the negative electrode is charged to 100%.

The lithium ion-supplying metal sheet functions as a source for supplying lithium ions doped to the negative electrode, and may include a lithium ion-containing material selected from lithium, lithium alloys and mixtures thereof. The lithium alloys may include Li-Al, Li-Cu, Li-Si, or the like, but are not limited thereto. The metal sheet may include a metal selected from lithium, lithium alloys and mixtures thereof, alone, or may further include a substrate attached to one surface of the metal for supporting the metal. The substrate may include stainless steel (SUS), aluminum, nickel, titanium, baked carbon, copper, or the like. The metal sheet may have a thickness of 15-300 µm, or 20-100 µm.

The electrolyte for pre-lithiation may include a lithium salt and a non-aqueous solvent.

The lithium salt may include LiCl, LiBr, LiI, LiClO₄, LiBF₄, LiB₁₀Cl₁₀, LiPF₆, LiCF₃SO₃, LiAsF₆, LiSbF₆, LiAlCl₄, CH₃SO₃Li, CF₃SO₃Li, (CF₃SO₂)₂NLi, lithium chloroborate, lithium lower aliphatic carboxylate, lithium 4-phenylborate, or two or more of them.

The non-aqueous solvent may be any organic solvent used conventionally in the art with no particular limitation. Preferably, a high-boiling point organic solvent may be used so as to minimize consumption of the electrolyte for pre-lithiation, caused by evaporation during the pre-lithiation.

The non-aqueous solvent may include a carbonate solvent, ester solvent, or two or more of them. Particular examples of the non-aqueous solvent include, but are not limited to: propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone, ethyl propionate, and methyl propionate, but are not limited thereto, and such solvents may be used alone or in combination.

The electrolyte for pre-lithiation may further include an additive.

The additive may include vinylene carbonate, vinyl ethylene carbonate, fluoroethylene carbonate, salicylic acid, LiBF₄, lithium bis(trifluoromethanesulfonyl)imide (LITFSI), lithium bis(oxalate)borate (LiBOB), lithium difluoro(oxalate)borate (LiODFB), or two or more of them.

According to an embodiment of the present disclosure, the preliminary negative electrode and the lithium ion-supplying metal sheet may be dipped in the electrolyte for pre-lithiation for 5-10 hours so that the preliminary negative electrode may be wetted sufficiently with the electrolyte for pre-lithiation. When the dipping time satisfies the above-defined range, the negative electrode active material may be wetted sufficiently with the electrolyte for pre-lithiation, thereby facilitating the subsequent process, pre-lithiation. In addition, it is possible to prevent the problem caused by an excessively long dipping time, the problem including degradation of the durability of the electrode and easy detachment of the active material from the current collector during processing. When the electrolyte for pre-lithiation infiltrates homogeneously into the negative electrode through the wetting, lithium ions isolated from the lithium ion-supplying metal sheet may be diffused homogeneously to the negative electrode, and thus pre-lithiation may be carried out with a homogeneous lithium ion concentration over the whole negative electrode.

To facilitate dipping/wetting of the preliminary negative electrode in/with the electrolyte for pre-lithiation, the reactor for carrying out wetting may be converted into a vacuum state of less than 760 mmHg. Herein, the electrolyte for pre-lithiation with which the preliminary negative electrode is wetted may have a temperature of 30-60°C.

Then, electrochemical charging is carried out by applying electric current to the preliminary negative electrode and the lithium ion-supplying metal sheet as a counter electrode, dipped in the electrolyte for prelithiation. In this manner, the preliminary negative electrode may be prelithiated.

According to an embodiment of the present disclosure, electrochemical charging may be carried out by using a charger, after the preliminary negative electrode and the lithium ion-supplying metal sheet as a counter electrode are dipped in the electrolyte for prelithiation and even the inner part of the negative electrode active material layer of the preliminary negative electrode is wetted sufficiently with the electrolyte for prelithiation.

Herein, the extent of electric current during charging may be 0.1-10 mA/cm², 0.5-3 mA/cm², or 0.5-2 mA/cm². When the extent of electric current during charging satisfies the above-defined range, lithium ions may react stably and homogeneously with the negative electrode.

The electrochemical charging is carried out in such a manner that the content of lithium intercalated to the prelithiated negative electrode active material layer may be 3-5% based on the lithium content intercalated when the negative electrode is charged to 100%. According to an embodiment of the present disclosure, the content of lithium intercalated to the prelithiated negative electrode active material layer may be 3.5-4.5%.

When the content of lithium intercalated to the prelithiated negative electrode active material layer satisfies a range of 3-5%, it is possible to improve the capacity, initial efficiency and cycle characteristics of a battery, to increase the energy density, and to reduce swelling caused by repetition of cycles.

When the content of lithium intercalated to the prelithiated negative electrode active material layer is less than 3%, it is not possible to obtain a sufficient effect of improving cycle characteristics due to an excessively small amount of lithium. When the content of lithium intercalated to the prelithiated negative electrode active material layer is larger than 5%, lithium electrodeposition may occur to cause degradation of stability, and the resistance of a battery may be increased due to an excessive amount of lithium.

The content of lithium intercalated to the prelithiated negative electrode active material layer may be determined by using a device which allows flow of electric current through the connection between a working electrode and a counter electrode under a low-rate charging condition.

Then, the prelithiated preliminary negative electrode may be taken out of the electrolyte for pre-lithiation, washed with an organic solvent, and then dried. The organic solvent used for washing may include dimethyl carbonate, diethyl carbonate, ethyl methyl carbonate, or the like. In this manner, it is possible to dissolve lithium salt sufficiently and to wash the negative electrode, while causing no damage upon the negative electrode.

The drying may be carried out by the method generally known to those skilled in the art. For example, the negative electrode may be dried in a dry room at 20-40°C for 10 minutes to 5 hours.

In still another aspect of the present disclosure, there is provided a lithium secondary battery including the above-described prelithiated negative electrode. In other words, an electrode assembly may be formed by using a positive electrode including a positive electrode active material, a separator and the prelithiated negative electrode, and the electrode assembly and an electrolyte may be introduced to a battery casing to provide a lithium secondary battery.

According to an embodiment of the present disclosure, there is provided a secondary battery including the prelithiated negative electrode, a positive electrode, and a separator interposed between the negative electrode and the positive electrode.

According to an embodiment of the present disclosure, the secondary battery including the prelithiated negative electrode may have a capacity retention (%) at the 500^{th} cycle, 10% higher, or 10-14% higher than the capacity retention (%) at the 500^{th} cycle of a secondary battery including a non-prelithiated artificial graphite negative electrode.

In the secondary battery according to an embodiment of the present disclosure, reversible lithium prelithiated on the negative electrode prevents deterioration and improves cycle characteristics, as charge/discharge cycles proceed. As a result, the secondary battery can have a higher capacity retention (%) as compared to a non-prelithiated secondary battery.

In addition, the secondary battery including the prelithiated negative electrode may have a high-temperature storage performance retention (%), 5% higher, or 5-8% higher than the high-temperature storage performance retention (%) of a secondary battery including a non-prelithiated artificial graphite negative electrode at the fourth week in a test for determination of high-temperature storage performance.

The high-temperature storage performance retention may be calculated as a capacity retention (%) by determining the residual capacity of the secondary battery, after carrying out self-discharge of lithium and discharging the battery at 0.33 C in a constant current (CC) mode at the fourth week, based on the capacity realized upon the full charging after charging/discharging at 0.33 C and at room temperature. The reason why the secondary battery according to an embodiment of the present disclosure has a higher high-temperature storage performance retention (%) is that additional supply of a reversible lithium source through the prelithiation of the negative electrode reduces loss of a lithium source during self-discharge, resulting in an increase in residual capacity retention (%).

The secondary battery including the prelithiated negative electrode according to an embodiment of the present disclosure may have increased energy density, such as an energy density increased by 4-7%, as compared to a secondary battery including non-prelithiated artificial graphite. In other words, according to an embodiment of the present disclosure, the energy density of the secondary battery including the negative electrode may be calculated by applying the battery capacity and nominal voltage of the negative electrode to which the content of lithium in the prelithiated negative electrode is reflected.

Particular examples of the positive electrode active material may include, but are not limited to: layered compounds such as lithium cobalt oxide (LiCoO₂) and lithium nickel oxide (LiNiO₂), or those compounds substituted with one or more transition metals; lithium manganese oxides such as those represented by the chemical formula of Li_{1+y}Mn_{2-y}O₄ (wherein y = 0-0.33), LiMnO₃, LiMn₂O₃ and LiMnO₂; lithium copper oxide (Li₂CuO₂); vanadium oxides such as LiV₃O₈, LiV₃O₄, V₂O₅ or Cu₂V₂O₇; lithium nickel oxides represented by the chemical formula of LiNi_{1-y}M_{y}O₂ (wherein M is Co, Mn, Al, Cu, Fe, Mg, B or Ga, and y = 0.01-0.3); ternary lithium manganese composite oxides represented by the chemical formula of LiMn_{2-y}M_{y}O₂ (wherein M = Co, Ni, Fe, Cr, Zn or Ta, and y = 0.01-0.1), or Li₂Mn₃MO₈ (wherein M = Fe, Co, Ni, Cu or Zn); LiMn₂O₄ in which Li is partially substituted with an alkaline earth metal ion; disulfide compounds; and Fe₂(MoO₄)₃; ternary lithium transition metal composite oxides, such as Li(NiₐCo_{b}Mn_{c})O₂ (0 < a < 1, 0 < b < 1, 0 < c < 1, a + b + c = 1); or the like.

According to an embodiment of the present disclosure, the positive electrode active material may include a lithium cobalt oxide, such as LiCoO₂, or the like. When using a lithium cobalt oxide as a positive electrode active material, dissolution of the other metals, such as nickel and manganese, may not occur in the negative electrode.

The positive electrode active material may be dispersed in a solvent together with a binder polymer, a conductive material and other additives to form positive electrode mixture slurry. Then, the positive electrode mixture slurry may be coated on at least one surface of a positive electrode current collector, followed by drying and pressing, to form a positive electrode.

Non-limiting examples of the positive electrode current collector include foil made of aluminum, nickel or a combination thereof, or the like, and non-limiting examples of the negative electrode current collector include foil made of copper, gold, nickel, copper alloy or a combination thereof, or the like.

The binder polymer, the conductive material and other additives used for the positive electrode may be the same as or different from those used in the negative electrode. Reference will be made to the above description about the binder polymer and the conductive material.

The separator is interposed between the positive electrode and the negative electrode, and an insulating thin film having high ion permeability and mechanical strength is used as the separator. The separator generally has a pore diameter of 0.01-10 µm and a thickness of 5-300 µm. The separator may include a porous polymer substrate, such as a porous polymer film substrate or porous polymer non-woven web substrate, alone, or may further include a porous coating layer disposed on at least one surface of the porous polymer substrate and containing inorganic particles and a binder polymer. The porous polymer film substrate may be a porous polymer film made of polyolefin, such as polyethylene or polypropylene. In addition to polyolefin, the porous polymer film substrate may be made of polyethylene terephthalate, polybutylene terephthalate, polyester, polyacetal, polyamide, polycarbonate, polyimide, polyetherether ketone, polyether sulfone, polyphenylene oxide, polyphenylene sulfide, polyethylene naphthalene, or the like, alone or in combination.

Non-limiting examples of the binder polymer include but are not limited to: polyvinylidene fluoride-co-hexafluoropropylene, polyvinylidene fluoride-co-trichloro ethylene, polymethyl methacrylate, polybutyl acrylate, polybutyl methacrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinylalchol, cyanoethyl cellulose, cyanoethyl sucrose, pullulan, carboxymethyl cellulose, or the like.

According to an embodiment of the present disclosure, the binder polymer may be classified into a dispersant binder polymer also functioning as a dispersant, and a non-dispersant binder polymer. The dispersant binder polymer is a polymer having at least one dispersion-contributing functional group in the backbone or sidechain of the polymer, and the dispersion-contributing functional group includes an OH group, CN group, or the like. Particular examples of the dispersant binder polymer include cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, or the like. Particular examples of the non-dispersant binder polymer include the above-listed binder polymers, except the examples of the dispersant binder polymer.

For example, the weight ratio of the inorganic particles to the total weight of the binder polymer and crosslinked polymer may be 50:50-99:1, particularly 70:30-95:5. When the weight ratio of the inorganic particles to the total weight of the binder polymer and crosslinked polymer satisfies the above-defined range, it is possible to prevent the problem of a decrease in pore size and porosity of the resultant coating layer, caused by an increase in content of the binder polymer and the crosslinked polymer. It is also possible to solve the problem of degradation of peeling resistance of the resultant coating layer, caused by a decrease in content of the binder polymer and the crosslinked polymer

Non-limiting examples of the inorganic particles include inorganic particles having a dielectric constant of 5 or more, particularly 10 or more, inorganic particles having lithium ion transportability, or a mixture thereof.

Non-limiting examples of the inorganic particles having a dielectric constant of 5 or more may include BaTiO₃, Pb(Zr,Ti)O₃ (PZT), Pb₁₋ₓLaₓZr_{1-y}Ti_{y}O₃ (PLZT), Pb(Mg_{1/3}Nb_{2/3})O₃PbTiO₃ (PMN-PT), hafnia (HfO₂), SrTiO₃, SnO₂, CeO₂, MgO, NiO, CaO, ZnO, ZrO₂, Y₂O₃, Al₂O₃, SiC, AIO(OH), Al₂O₃ H₂O, or a mixture thereof.

As used herein, the term 'inorganic particles having lithium ion transportability' refers to inorganic particles which contain lithium elements and do not store lithium but transport lithium ions. Non-limiting examples of the inorganic particles having lithium ion transportability include lithium phosphate (Li₃PO₄), lithium titanium phosphate (LiₓTi_{y}(PO₄)₃, 0 < x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (1 < x < 4, 0 < y < 13), such as 14Li₂O-9Al₂O₃-38TiO₂-39P₂O₅, lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), such as Li_{3.25}Ge_{0.25}P_{0.75}S₄, lithium nitride (LiₓN_{y}, 0 < x < 4, 0 < y < 2), such as Li₃N, SiS₂-based glass (LiₓSi_{y}S_{z}, 0 < x < 3, 0 < y < 2, 0 < z < 4), such as Li₃PO₄-Li₂S-SiS₂, and P₂S₅-based glass (LiₓP_{y}S_{z}, 0 < x < 3, 0 < y < 3, 0 < z < 7), such as LiI-Li₂S-P₂S₅, or a mixture thereof.

Although there is no particular limitation in the thickness of the porous coating layer, the thickness may be 1-10 µm, or 1.5-6 µm.Also, the porosity of the porous coating layer is not particularly limited, but it may be preferably 35-65%.

The electrolyte includes conventional electrolyte ingredients, such as an organic solvent and an electrolyte salt. The electrolyte salt that may be used is a salt having a structure of A⁺B⁻, wherein A⁺ includes an alkali metal cation such as Li⁺, Na⁺, K⁺ or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof. Particularly, a lithium salt is preferred. For example, LiClO₄, LiCF₃SO₃, LiPF₆, LiAsF₆, LiN(CF₃SO₂)₂ or a mixture thereof may be used.

The organic solvent used for the electrolyte may include a solvent generally known to those skilled in the art, such as a cyclic carbonate solvent containing a halogen substituent or not; a linear carbonate solvent; an ester solvent, a nitrile solvent, a phosphate solvent, or a mixture thereof. Particular examples of the solvent that may be used include propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (GBL), flouoroethylene carbonate (FEC), methyl formate, ethyl formate, propyl formate, methyl acetate, ethyl acetate, propyl acetate, pentyl acetate, methyl propionate, ethyl propionate, propyl propionate, butyl propionate, or a mixture thereof.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

There is no particular limitation in the appearance or casing of the secondary battery according to an embodiment of the present disclosure. For example, the secondary battery may have a cylindrical shape using a can, a prismatic shape, a pouch-like shape or a coin-like shape. The secondary battery according to an embodiment of the present disclosure may be a pouch-like shape.

In addition, the secondary battery according to an embodiment of the present disclosure may be a lithium secondary battery. The lithium secondary battery may include any conventional lithium secondary batteries, such as lithium metal secondary batteries, lithium ion secondary batteries, lithium polymer secondary batteries or lithium ion polymer secondary batteries.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

In the following Examples and Comparative Examples, 'average particle diameter, D₅₀' is the particle diameter at the point of 50% in the particle number accumulated distribution as a function of particle diameter, and is determined by using the laser diffraction method. Particularly, powder to be analyzed is dispersed in a dispersion medium and introduced to a commercially available laser diffraction particle size analyzer (e.g. Microtrac S3500) to measure a difference in diffraction pattern depending on particle size, when the particles pass through laser beams, and then particle size distribution can be calculated. Then, the average particle diameter, D₅₀, may be determined by calculating the particle diameter at the point of 50% in the particle number accumulated distribution depending on particle diameter in the analyzer system.

### Example 1

### <Manufacture of Negative Electrode>

First, needle cokes were heat treated and graphitized at 1,500°C for 12 hours to obtain primary particles. Next, the primary particles were mixed with a pitch binder and heat treated at a temperature of 2,900°C for 12 hours to increase the crystallinity of the active material and to form secondary particles, thereby providing artificial graphite.

The resultant artificial graphite is not coated with carbon and is high-capacity artificial graphite having a capacity of 360 mAh/g and an average particle diameter of 18 µm.

Then, the artificial graphite, Super C65 as a conductive material, styrene butadiene rubber (SBR) as a binder and carboxymethyl cellulose (CMC) as a thickener were mixed at a weight ratio of 96:1:2:1, and water was added to the resultant mixture to obtain negative electrode slurry.

The negative electrode slurry was coated on one surface of copper foil (current collector) at a loading amount of 3.6 mAh/cm². Then, the current collector coated with the slurry was pressed and vacuum-dried at about 130°C for 8 hours to obtain a preliminary negative electrode including a negative electrode active material layer formed on a current collector.

After that, a non-aqueous electrolyte was prepared by adding 1 M LiPF₆ to a non-aqueous electrolyte solvent including ethylene carbonate and ethyl methyl carbonate mixed at a volume ratio of 3:7.

The preliminary negative electrode and a lithium ion-supplying metal sheet (lithium metal/SUS formed by depositing lithium metal on stainless steel (SUS) substrate) as a counter electrode were introduced to the electrolyte for prelithiation, and electric current was applied thereto at 0.1 C for 8 hours to carry out lithium intercalation to the negative electrode active material layer. In this manner, prelithiation was carried out. Herein, the content of lithium intercalated to the prelithiated negative electrode active material layer was 4.5% based on the lithium content intercalated when the negative electrode is charged to 100%. In this manner, a prelithiated preliminary negative electrode was finished.

### <Manufacture of Positive Electrode>

First, a lithium cobalt oxide, LiCoO₂, as a positive electrode active material, carbon black as a conductive material, and polyvinylidene fluoride (PVdF) as a binder were added to N-methyl pyrrolidone (NMP) as a solvent at a weight ratio of 96:2:2 to prepare positive electrode active material slurry. The slurry was coated on one surface of an aluminum current collector having a thickness of 15 µm, and then dried and pressed under the same condition as the negative electrode to obtain a positive electrode. Herein, the positive electrode active material layer was loaded in an amount of 20 mg/cm² on the dry weight basis.

### <Manufacture of Pouch-Type Secondary Battery>

First, 1 M LiPF₆ was added to a non-aqueous electrolyte solvent including ethylene carbonate and ethyl methyl carbonate mixed at a volume ratio of 3:7 to prepare a non-aqueous electrolyte.

Next, a polyolefin separator was interposed between the positive electrode and the negative electrode obtained as described above, the resultant structure was introduced to a pouch-type casing, and then the electrolyte was injected thereto to obtain a secondary battery.

### <Manufacture of Coin-Type Half-Cell Secondary Battery>

The negative electrode obtained as described and Li metal as a counter electrode were used. In addition, a polyolefin separator was interposed between the negative electrode and Li metal to form an electrode assembly.

Then, an electrolyte prepared by adding 1 M LiPF₆ to a non-aqueous electrolyte solvent including ethylene carbonate (EC) and ethyl methyl carbonate (EMC) mixed at a volume ratio of 3:7 was injected to the electrode assembly to obtain a coin-type half-cell secondary battery.

### Comparative Example 1

### <Manufacture of Negative Electrode>

First, needle cokes were heat treated and graphitized at 1,500°C for 12 hours to obtain primary particles. Next, the primary particles were mixed with a pitch binder and heat treated at a temperature of 2,900°C for 12 hours to increase the crystallinity of the active material and to form secondary particles, thereby providing artificial graphite.

The resultant artificial graphite is not coated with carbon and is high-capacity artificial graphite having a capacity of 360 mAh/g and an average particle diameter of 18 µm.

Then, the artificial graphite, Super C65 as a conductive material, styrene butadiene rubber (SBR) as a binder and carboxymethyl cellulose (CMC) as a thickener were mixed at a weight ratio of 96:1:2:1, and water was added to the resultant mixture to obtain negative electrode slurry.

The negative electrode slurry was coated on one surface of copper foil (current collector) at a loading amount of 3.6 mAh/cm². Then, the current collector coated with the slurry was pressed and vacuum-dried at about 130°C for 8 hours to obtain a non-prelithiated preliminary negative electrode including a negative electrode active material layer formed on a current collector. In other words, a preliminary negative electrode obtained in the same manner as described in Example 1 was used as a negative electrode.

A pouch-type secondary battery and a coin-type secondary battery were obtained in the same manner as Example 1, except that the negative electrode was used.

### Comparative Example 2

A preliminary negative electrode was obtained in the same manner as Example 1.

The preliminary negative electrode and a lithium ion-supplying metal sheet (lithium metal/SUS formed by depositing lithium metal on stainless steel (SUS) substrate) as a counter electrode were introduced to the electrolyte for prelithiation, and electric current was applied thereto at 0.1 C for 4 hours to carry out lithium intercalation to the negative electrode active material layer. In this manner, prelithiation was carried out. Herein, the content of lithium intercalated to the prelithiated negative electrode active material layer was 2% based on the lithium content intercalated when the negative electrode is charged to 100%. In this manner, a prelithiated preliminary negative electrode was finished.

A pouch-type secondary battery and a coin-type secondary battery were obtained in the same manner as Example 1, except that the negative electrode was used.

### Comparative Example 3

A preliminary negative electrode was obtained in the same manner as Example 1,

The preliminary negative electrode and a lithium ion-supplying metal sheet (lithium metal/SUS formed by depositing lithium metal on stainless steel (SUS) substrate) as a counter electrode were introduced to the electrolyte for prelithiation, and electric current was applied thereto at 0.1 C for 15 hours to carry out lithium intercalation to the negative electrode active material layer. In this manner, prelithiation was carried out. Herein, the content of lithium intercalated to the prelithiated negative electrode active material layer was 8% based on the lithium content intercalated when the negative electrode is charged to 100%. In this manner, a prelithiated preliminary negative electrode was finished.

A pouch-type secondary battery and a coin-type secondary battery were obtained in the same manner as Example 1, except that the negative electrode was used.

### Comparative Example 4

A preliminary negative electrode was obtained in the same manner as Example 1,

The preliminary negative electrode and a lithium ion-supplying metal sheet (lithium metal/SUS formed by depositing lithium metal on stainless steel (SUS) substrate) as a counter electrode were introduced to the electrolyte for prelithiation, and electric current was applied thereto at 0.1 C for 30 hours to carry out lithium intercalation to the negative electrode active material layer. In this manner, prelithiation was carried out. Herein, the content of lithium intercalated to the prelithiated negative electrode active material layer was 15% based on the lithium content intercalated when the negative electrode is charged to 100%. In this manner, a prelithiated preliminary negative electrode was finished.

A pouch-type secondary battery and a coin-type secondary battery were obtained in the same manner as Example 1, except that the negative electrode was used.

### Comparative Example 5

A preliminary negative electrode was obtained in the same manner as Example 1,

The preliminary negative electrode and a lithium ion-supplying metal sheet (lithium metal/SUS formed by depositing lithium metal on stainless steel (SUS) substrate) as a counter electrode were introduced to the electrolyte for prelithiation, and electric current was applied thereto at 0.1 C for 40 hours to carry out lithium intercalation to the negative electrode active material layer. In this manner, prelithiation was carried out. Herein, the content of lithium intercalated to the prelithiated negative electrode active material layer was 20% based on the lithium content intercalated when the negative electrode is charged to 100%. In this manner, a prelithiated preliminary negative electrode was finished.

A pouch-type secondary battery and a coin-type secondary battery were obtained in the same manner as Example 1, except that the negative electrode was used.

### <Test of Discharge Capacity>

Each of the pouch-type secondary batteries according to Example 1 and Comparative Examples 1-5 was charged/discharged with a charge cut-off voltage of 4.4 V at a rate of 0.5 C, and a discharge cut-off voltage of 3.3 V at a rate of 0.5 C to determine the charge capacity and discharge capacity during charge/discharge. The results are shown in the following Table 1.

### <Test of High-Temperature Cycle Characteristics>

Each of the pouch-type secondary batteries according to Example 1 and Comparative Examples 1-5 was subjected to 500 charge/discharge cycles at a temperature of 45°C with a charge cut-off voltage of 4.4 V at a rate of 0.5 C, and a discharge cut-off voltage of 3.3 V at a rate of 0.5 C. The ratio of the discharge capacity at the last cycle based on the discharge capacity at the first cycle was calculated as high-temperature cycle characteristics (%). The results are shown in the following Table 1.

### <Test of Room Temperature Cycle Characteristics>

Each of the pouch-type secondary batteries according to Example 1 and Comparative Examples 1-5 was subjected to 500 charge/discharge cycles at a temperature of 25°C with a charge cut-off voltage of 4.4 V at a rate of 0.5 C, and a discharge cut-off voltage of 3.3 V at a rate of 0.5 C. The ratio of the discharge capacity at the last cycle based on the discharge capacity at the first cycle was calculated as room temperature cycle characteristics (%). The results are shown in the following Table 1.

### <High-Temperature Storage Test>

Each of the coin-type half-cell according to Example 1 and Comparative Examples 1-5 was charged at 25°C in a constant current (CC)/constant voltage (CV) mode at 0.1 C and 5 mV with a cut-off current of 0.005 C, and then discharged in a CC mode at 0.1 C to 1.5 V. The above-mentioned charge/discharge cycle was repeated twice. Then, at the third cycle, each battery was discharged at 0.05 C to a state-of-charge (SOC) of 5% and set in a charged state to a SOC of 95%.

The coin-type half-cell set to a SOC of 95% was stored for 4 weeks in a chamber at a high temperature of 60°C, and discharged at 0.1 C to determine the residual capacity retention (%). The results are shown in the following Table 1.

### <Energy Density>

Each of the pouch-type secondary batteries according to Example 1 and Comparative Examples 1-5 was subjected to 500 charge/discharge cycles at a temperature of 25°C with a charge cut-off voltage of 4.4 V at a rate of 0.5 C, and a discharge cut-off voltage of 3.3 V at a rate of 0.5 C. Then, the discharge capacity at the last cycle was determined. The discharge capacity at the last cycle was taken as the battery capacity, and the energy density was calculated in the unit of Wh/L representing the battery capacity per liter of the negative electrode. The results are shown in the following Table 1.

**[Table 1]**

| | Ex. 1 | Comp. Ex. 1 | Comp. Ex. 2 | Comp. Ex. 3 | Comp. Ex. 4 | Comp. Ex. 5 |
|---|---|---|---|---|---|---|
| Discharge | 2340 | 2200 | 2150 | 2170 | 2120 | 2110 |
| capacity (mAh) | | | | | | |
| High-temperature cycle characteristics (%) | 80 | 70 | 65 | 68 | 63 | 66 |
| Room temperature cycle characteristics (%) | 91 | 81 | 76 | 79 | 74 | 71 |
| High-temperature capacity retention (%) | 91 | 87 | 86 | 85 | 80 | 77 |
| Energy density (Wh/L) | 706 | 700 | 698 | 697 | 678 | 669 |

Referring to Table 1, the secondary battery according to Example 1 uses a negative electrode preliminarily subjected to prelithiation to a content of 4.5% (within a range of 3-5%) of lithium intercalated to the negative electrode active material layer including high-capacity artificial graphite having no carbon coating through an electrochemical charging process, based on the lithium content intercalated when the negative electrode is charged to 100%, and thus shows improved cycle characteristics, high capacity and high energy density and improved high-temperature storage stability. On the contrary, as compared to the secondary battery according to Example 1, each of the secondary batteries including the non-prelithiated negative electrode according to Comparative Example 1 and each of the negative electrodes subjected to prelithiation to 2% (smaller than a range of 3-5%) according to Comparative Example 2 and to 8%, 15% and 20% (larger than a range of 3-5%) according to Comparative Examples 3-5 shows degraded results in terms of high-temperature and room temperature cycle characteristics, high-temperature storage characteristics and energy density.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A prelithiated negative electrode comprising: a negative electrode current collector; and a negative electrode active material layer formed on at least one surface of the negative electrode current collector,
wherein the negative electrode active material layer comprises high-capacity artificial graphite having no carbon coating,
the negative electrode active material layer is prelithiated, and
the content of lithium intercalated to the prelithiated negative electrode active material layer is 3-5% based on the lithium content intercalated when the negative electrode is charged to 100%.

2. The prelithiated negative electrode according to claim 1, wherein the high-capacity artificial graphite has a capacity of 360 mAh/g or more.

3. The prelithiated negative electrode according to claim 1, wherein the high-capacity artificial graphite has an average particle diameter (D₅₀) of 18 µm or more.

4. The prelithiated negative electrode according to claim 1, wherein the prelithiation is carried out by using a lithium ion-supplying metal sheet through direct electric contact.

5. A secondary battery comprising the prelithiated negative electrode as defined in any one of claims 1 to 4, a positive electrode, and a separator interposed between the negative electrode and the positive electrode.

6. The secondary battery according to claim 5, which has a capacity retention (%) at the 500^{th} cycle, 10% higher than the capacity retention (%) at the 500^{th} cycle of a secondary battery comprising a non-prelithiated artificial graphite negative electrode, and has a high-temperature storage performance retention (%), 5% higher than the high-temperature storage performance retention (%) of a secondary battery comprising a non-prelithiated artificial graphite negative electrode at the fourth week in a test for determination of high-temperature storage performance.

7. The prelithiated negative electrode according to claim 5, wherein the positive electrode comprises a lithium cobalt oxide.

8. The prelithiated negative electrode according to claim 5, which is a pouch-type secondary battery.

9. A method for manufacturing a prelithiated negative electrode, comprising the steps of:
preparing a preliminary negative electrode having a negative electrode active material layer comprising high-capacity artificial graphite having no carbon coating; and
dipping the preliminary electrode and a lithium ion-supplying metal sheet as a counter electrode in an electrolyte, and applying electric current thereto to carry out prelithiation through the intercalation of lithium ions to the negative electrode active material layer, wherein the content of lithium intercalated to the prelithiated negative electrode active material layer is 3-5% based on the lithium content intercalated when the negative electrode is charged to 100%.

10. The method for manufacturing a prelithiated negative electrode according to claim 9, wherein the high-capacity artificial graphite is obtained by the process comprising the steps of: heat treating a carbon precursor to obtain primary particles; and mixing the primary particles with a pitch binder and carrying out heat treatment to obtain secondary particles, and comprising no step of forming carbon coating on the secondary particles.

11. The method for manufacturing a prelithiated negative electrode according to claim 9, wherein the electrolyte comprises a lithium salt and a non-aqueous solvent.
